Europäisches Patentamt

**European Patent Office**

**Office européen des brevets**

(11) Veröffentlichungsnummer: **0 144 494**

**A1**

(12) **EUROPÄISCHE PATENTANMELDUNG**

(21) Anmeldenummer: **84105672.4**

(22) Anmeldetag: **18.05.84**

(51) Int. Cl.⁴: **G 01 G 19/02**
**G 01 G 3/14**

(30) Priorität: **08.11.83 DE 3340355**

(43) Veröffentlichungstag der Anmeldung:
**19.06.85 Patentblatt 85/25**

(84) Benannte Vertragsstaaten:
**AT BE CH DE FR GB IT LI NL SE**

(71) Anmelder: **Dr.-Ing. Ludwig Pietzsch GmbH & Co.**
**Hertzstrasse 32-34**
**D-7505 Ettlingen(DE)**

(72) Erfinder: **Horn, Klaus, Prof. Dr.-Ing.**
**Lindenstrasse 10a**
**D-3300 Braunschweig-Watenbüttel(DE)**

(72) Erfinder: **Overlach, Knud, Dr.-Ing.**
**Ernst-Barlach-Ring 11**
**D-7505 Ettlingen 6(DE)**

(72) Erfinder: **Pietzsch, Ludwig, Dr.-Ing.**
**Im Rosengärtle 14**
**D-7500 Karlsruhe(DE)**

(74) Vertreter: **Liesegang, Roland, Dr.-Ing.**
**Sckellstrasse 1**
**D-8000 München 80(DE)**

(54) **Radlastwaage.**

(57) Eine Radlastwaage weist eine rechteckige, flache Platte (1) aus einem Leichtmaterial mit Meßeigenschaften auf. Längs zweier Auflagekanten sind in der Platte je eine Reihe von Ausnehmungen (4) vorgesehen, welche Stege (5) bilden. Wände an Hohlraümen im Bereich der Stege (5) sind mit Dehnungsmeßstreifen beklebt, um die Biege- und vor allem die Scherbeanspruchung unter der Last eines in x-Richtung auf den Biegeabschnitt (3) aufgefahrenen Rades zu bestimmen.

FIG. 1

EP 0 144 494 A1

**Dr.-Ing. Roland Liesegang**

Patentanwalt
European Patent Attorney

0144494

Sckellstrasse 1
D-8000 München 80
Telefon (089) 4 48 24 96

Telex 5 214 382 pali d
Telekopierer (089) 27 20 48 0. 27 20 48 1
Telegramme patemus münchen

Postscheck München 394 18-802
Hypobank München 6 400 194 333
Reuschelbank München 2 603 007

DR.-ING. L. PIETZSCH GMBH & Co.

Ettlingen, Bundesrepublik Deutschland

EU 005 58

Radlastwaage

Die Erfindung betrifft eine Radlastwaage mit einer rechteckigen, flachen Platte, die an zwei gegenüberliegenden Auflagekanten vorzugsweise unterbrochen auflagerbar ist.

Bei einer bekannten Rad- oder Achlastwaage dieser Art weist eine Platte parallel zu den Auflagekanten verlaufende Nuten auf, in deren Grund im Abstand voneinander Dehnungsmeßstreifen angebracht sind (DE-OS 19 53 355).

Bei einer anderen Rad- oder Achslastwaage der beschriebenen Art weist die Platte auf den Auflagekanten trapezförmige Vorsprünge auf, deren schmale äußere Enden an einem Rahmen abgestützt sind und unter denen die Dehnungsmeßstreifen angebracht sind (DE-OS 26 15 289).

Bei beiden bekannten Waagen wird die Durchbiegung der Platte unter Last erfaßt und daraus in ein für die Rad- oder Achslast repräsentatives Signal ermittelt.

Der Erfindung liegt die Aufgabe zugrunde, eine transportable Radlastwaage flacher Bauart zu schaffen, die trotz einfacher Herstellung eine hohe Meßgenauigkeit gewährleistet.

Zur Lösung dieser Aufgabe ist bei einer Radlastwaage der eingangs beschriebenen Art gemäß der Erfindung vorgesehen, daß die Platte aus elastischem Material mit Meßeigenschaften besteht, und daß im Abstand von den Auflagekanten mehrere Ausnehmungen in der Platte vorgesehen sind, die zwischen sich Stege bilden, an denen Dehnungsmeßstreifen zum Erfassen von Biege- und/oder Scherbeanspruchungen angebracht sind.

Gemäß einer vorteilhaften Ausgestaltung der Erfindung ist vorgesehen, daß die Ausnehmungen in zwei parallel zu den Auflagekanten verlaufenden Reihen mit einem solchen Abstand angeordnet sind, daß auf den dazwischen verbleibenden, ungeschwächten Plattenabschnitt mindestens der Längslatsch eines Nutzfahrzeugreifens paßt.

Während die Rad- oder Achslastwaagen gemäß dem Stand der Technik ausschließlich die Biegung der Platte zum Erfassen der Last ausnützen, ist bei der Erfindung die Möglichkeit gegeben, vornehmlich oder ausschließlich die Scherbeanspruchung der Platte zu erfassen. Dies wird gemäß einer bevorzugten Ausgestaltung der Erfindung dadurch erreicht, daß die Dehnungsmeßstreifen auf in Querschnittsrichtung der Platte verlaufenden Wände am oder im Steg geklebt sind. Durch Erfassen der Scherbeanspruchungen

läßt sich der Einfluß der Lage bzw. Verteilung der Last in der Mittelzone ausschalten, was die Genauigkeit in einer Weise zu erhöhen erlaubt, daß die Radlastwaage nach der Erfindung in die Klasse der Grobwaagen (Größenordnung der Genauigkeit: 0,5 % vom Endwert) eingereiht werden kann. Außerdem ermöglicht das Erfassen der Scherbeanspruchung eine breite, ausschließlich nach Festigkeitsgesichtspunkten dimensionierte Mittelzone. Die einzelnen Stege übertragen in der Summe stets definierte Scherkräfte unabhängig von der Lage der Last auf der Platte.

Die Ausnehmungen durchsetzen vorzugsweise den Plattenquerschnitt, wenngleich auch eine Lösung mit nicht durchgehenden Ausnehmungen möglich ist. Nach einer bevorzugten Ausgestaltung weist jeder Steg mindestens einen Hohlraum auf, in welchen die Dehnungsmeßstreifen eingeklebt sind. Eine konstruktive Ausgestaltung dieses Gedankens zeichnet sich dadurch aus, daß jeder Steg Doppel-T-Querschnitt aufweist und daß die Dehnungsmeßstreifen gegenüberliegend auf den Doppel-T-Steg (welcher zwei gegenüberliegende Hohlräume oder "Taschen" bildet) aufgeklebt sind. Durch die Verwendung des Doppel-T-Querschnittes läßt sich die Biegebeanspruchung der Stege minimal halten, während die zulässigen Materialbelastungen hauptsächlich durch Schubspannungen erreicht werden.

Der Stegquerschnitt in Richtung normal zu den Auflagekanten kann gemäß einer Ausführung konstant und gemäß einer anderen Ausführung veränderlich sein, wobei im letzteren Falle die Stegwände insbesondere konkav gewölbt sein können, so daß die schwächste Stelle des Steges etwa in seiner Längsmitte liegt.

- 4 -    0144494

Eine andere, bevorzugte Ausführung der Erfindung zeichnet sich dadurch aus, daß der Hohlraum von einer verschlossenen Bohrung gebildet ist, welche von der Seitenkante der Platte her in den Steg hineinreicht. Vorteilhaft ist es dabei, wenn die Bohrungen über die Ausnehmungen hinaus nach innen ragen und mittels einer Querbohrung zur Verkabelung sämtlicher Dehnungsmeßstreifen miteinander verbunden sind. Mindestens eine Bohrung kann dabei bis zur gegenüberliegenden Seitenkante der Platte ragen und dort beispielsweise ebenfalls in eine entsprechende Querbohrung münden. Die Ausgänge der Bohrungen sind dabei zweckmäßig bis auf eine Bohrung, welche mittels einer dichten Durchführung für den elektrischen Anschluß ausgerüstet ist, hermetisch abgeschlossen.

Um die Dehnungsmeßstreifen einfach und dauerhaft an den entsprechenden Wänden der Hohlräume, sei es an den Stegen oder in den Bohrungen, befestigen zu können, ist bevorzugt, wenn die Hohlräume abgeflachte Wände zur Bildung ebener Auflageflächen für die Dehnungsmeßstreifen aufweisen.

Bei der zuletzt beschriebenen Ausführung sind die Dehnungsmeßstreifen und ihre elektrische Versorgung vor mechanischer Beanspruchung und dem Angriff von Feuchtigkeit oder Gasen geschützt. Ihre Eigenschaften bleiben deshalb auch bei langer Gebrauchsdauer praktisch unverändert, was eine gleichbleibende Meßgenauigkeit über eine lange Lebensdauer gewährleistet.

Um minimale Biegemomente im Bereich der Stegwände, d. h. an der Schermeßstelle, zu erreichen, kann jede Ausnehmung zwei Schwächungsabschnitte größerer Abmessungen, welche die einander zugewandten Seiten zweier benachbarter Stege begrenzen, sowie einen schmalen Verbindungsabschnitt für die beiden Schwächungsabschnitte aufweisen.

Gemäß einer weiteren Ausgestaltung der Erfindung
kann die Platte in Fahrtrichtung gesehen in mehrere
Segmente unterteilt sein, die je nach dem Einsatzfall bzw. der Größe der zu erfassenden Last in
jeder Reihe einen oder mehrere Stege bzw. Paare
von Ausnehmungen aufweist. Solche Segmente lassen
sich modulartig zu unterschiedlich großen Platten
zusammenfügen.

Mehrere Radlastwaagen, insbesondere eine der Radzahl
eines Fahrzeuges, z. B. vier, entsprechende Anzahl
lassen sich an eine gemeinsame Auswertvorrichtung
anschließen.

Für jede der beiden Auflagekanten der Platte kann
je eine flexible Abdeckleiste vorgesehen sein,
die gleichzeitig Schwellen für die Radpositionierung
bilden.

Um einen Transport von Hand zu ermöglichen, besteht
die Platte zweckmäßig aus einem Leichtmaterial
mit den geforderten Meßeigenschaften, vorzugsweise
aus einer hochfesten Leichtmetallegierung, insbesondere Aluminiumlegierung. Dieser Werkstoff läßt
sich leicht verarbeiten, beispielsweise durch Walzen
oder Strangpressen, und bearbeiten und verfügt
außerdem über die geforderte Meßeigenschaften.
Ein handelsübliches Material, das allen Anforderungen
genügt, ist die Legierung AlZnMgCu 0,5.

Um einen Überlastungsschutz zu schaffen, sind gemäß
einer weiteren Ausgestaltung der Erfindung die
Auflagekanten der Platte über Fußelemente abgestützt,
welche bis unter die Stege reichen, jedoch in den
Bereichen unter den Stegen Vertiefungen aufweisen,
derart, daß die Stege ab einer definierten Last
auf den Fußelementen aufliegen.

0144494

Die Erfindung schafft eine flache, leicht zu transportierende Radlastwaage geringen Gewichts und hoher Genauigkeit in der Klasse der Grobwaagen, wobei der Herstellaufwand begrenzt ist.

Die Erfindung ist im folgenden anhand schematischer Zeichnungen an Ausführungsbeispielen mit weiteren Einzelheiten näher erläutert. Es zeigen:

Fig. 1       die prinzipielle Ausführung einer Radlastwaage nach der Erfindung in perspektivischer Darstellung;

Fig. 2a, 2b und 2c   in einer teilweise abgebrochenen Teildraufsicht, einer Schnittdarstellung nach der Linie IIb-IIb und einer Schnittdarstellung nach der Linie IIc-IIc eine Einzelheit der Radlastwaage nach Fig. 1;

Fig. 3a, 3b und 3c   in einer Draufsicht, einem Längsschnitt und einem Querschnitt eine ausgeführte Radlastwaage nach der Erfindung;

Fig. 4a, 4b und 4c   in einer Teildraufsicht, in einer Schnittdarstellung nach der Linie IVb-IVb und einer Schnittdarstellung nach der Linie IVc-IVc eine Einzelheit der Radlastwaage nach Fig. 3 in vergrößertem Maßstab,

Fig. 5a, 5b und 5c   in Darstellungen wie in Fig. 2 und 4 eine Einzelheit einer abgewandelten Radlastwaage nach der Erfindung und

Fig. 6 und 7   in einem Querschnitt und einem Teilschnitt nach der Linie VII-VII eine weitere Ausführung einer Radlastwaage nach der Erfindung.

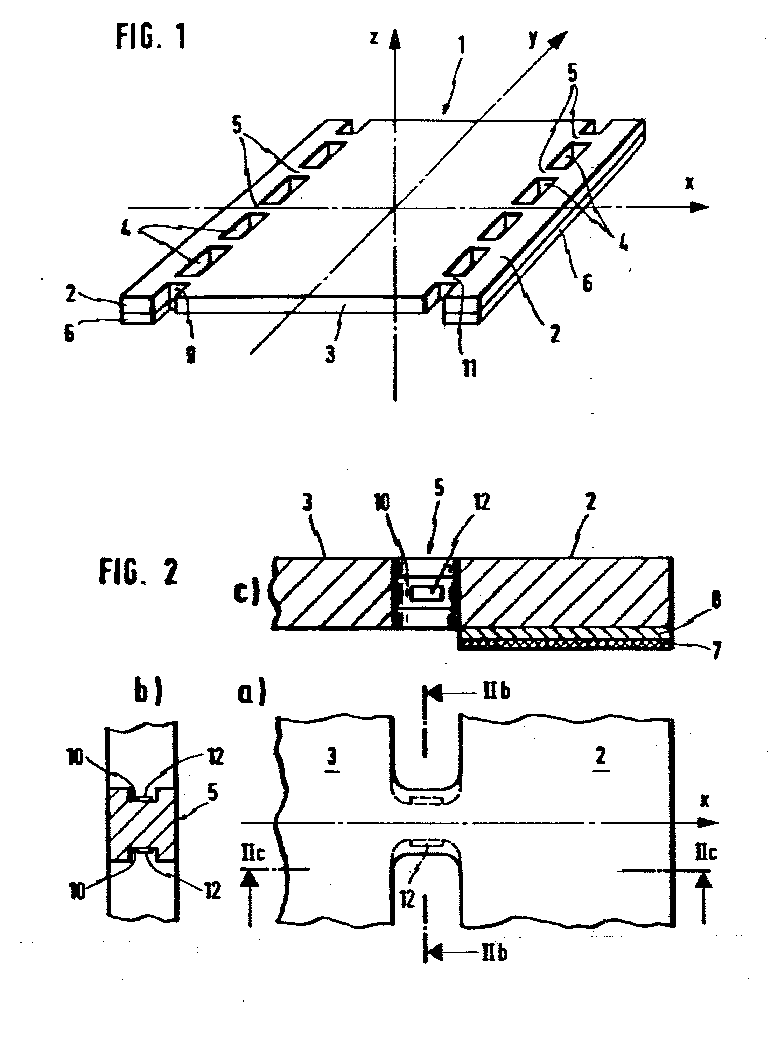

Die Ausführung der Radlastwaage nach den Fig. 1 und 2 weist eine insgesamt mit dem Bezugszeichen 1 bezeichnete Platte auf, die zwei sich quer zur Fahrtrichtung x des zu prüfenden Rades (nicht gezeigt) in y-Richtung erstreckende Auflageleisten 2 und dazwischen eine Biegeabschnitt 3 umfaßt. Zwischen den Auflageleisten 2 und dem Biegeabschnitt 3 sind je eine Reihe von Ausnehmungen 4 vorgesehen, welche in Fahrtrichtung x verlaufende Stege 5 bilden. Diese Stege 5 verbinden die Auflageleisten 2 mit dem Biegeabschnitt 3. Unter den Auflageleisten 2 sind flexible Fußleisten 6 vorgesehen, die gemäß Fig. 2c aus einem mit einer Gummischicht 7 vulkanisierten Metallstreifen 8 bestehen.

Die Stegwände 9, die sich in z-Richtung, - der Belastungsrichtung der Platte 1 -, quer zur Oberfläche der Platte 1 erstrecken, sind gemäß Fig. 2 vorteilhaft mit offenen Hohlräumen oder Taschen 10 versehen, so daß sich gemäß Fig. 2b ein Doppel-T-Querschnitt ergibt. Dieser Querschnitt minimiert die Biegebeanspruchung. Auf den die Taschen bildenden Doppel-T-Steg sind beidseitig Dehnungsmeßstreifen 12 zum Erfassen der Scherbeanspruchung des Steges 5 aufgeklebt. Statt auf die Stegwände 9 könnten Dehnungsmeßstreifen auch auf die Stegflächen 11 einseitig oder beidseitig etwa in der Plattenebene geklebt werden, und zwar zum Schutz der Dehnungsmeßstreifen vorteilhaft in Vertiefungen an diesen Stellen. In diesem Fall würde die Biegebeanspruchung der Platte 1 unter Last erfaßt werden.

Die in den Fig. 1 und 2 gezeigte Erfassung der in dem Biegeabschnitt über die Stege zu den Auflageleisten übertragenen Last durch Ermittlung der Scherkräfte hat den Vorteil, daß sie von der Lage bzw. Verteilung der Last auf den Biegeabschnitt 3 unabhängig ist.

Die Stege 5 haben in Fahrtrichtung x gesehen jedenfalls dort, wo die Dehnungsmeßstreifen 12 aufgeklebt sind, gleichbleibenden Querschnitt.

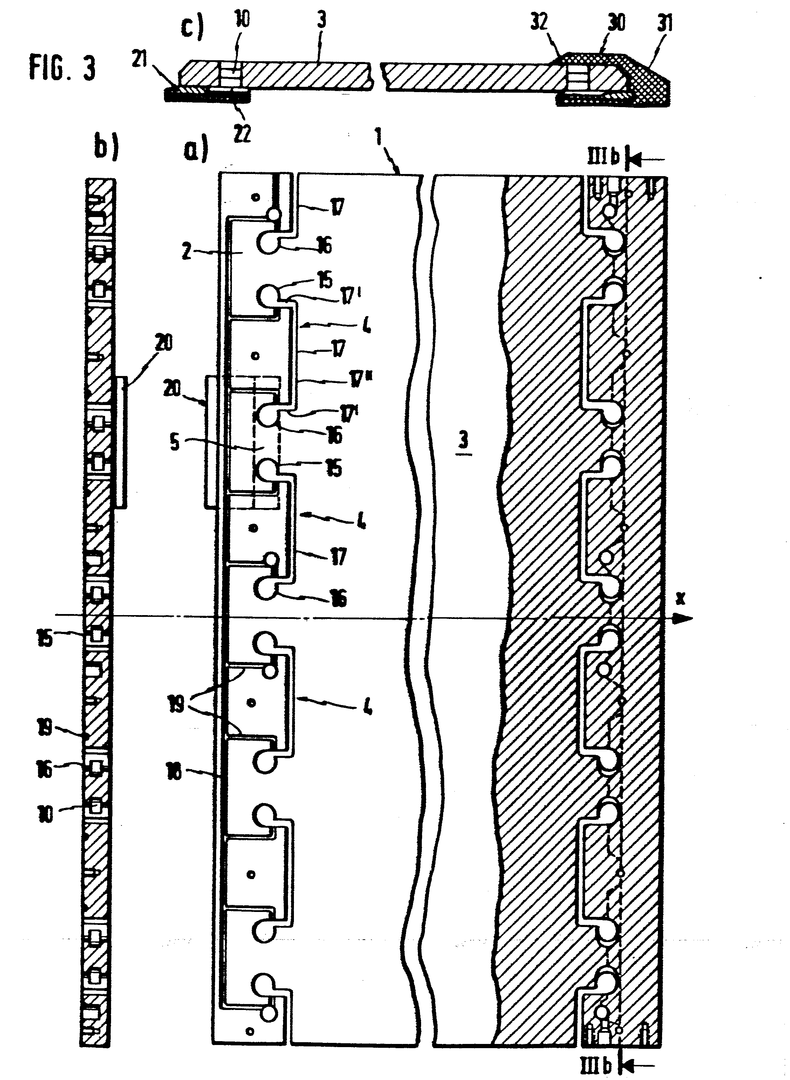

Fig. 3 zeigt in den gezeichneten verschiedenen Darstellungen a,b und c eine ausgeführte Radlastwaage. Funktionell mit der Ausführung nach Fig. 1 übereinstimmende Bauteile sind hier der Einfachheit halber mit gleichen Bezugszeichen bezeichnet.

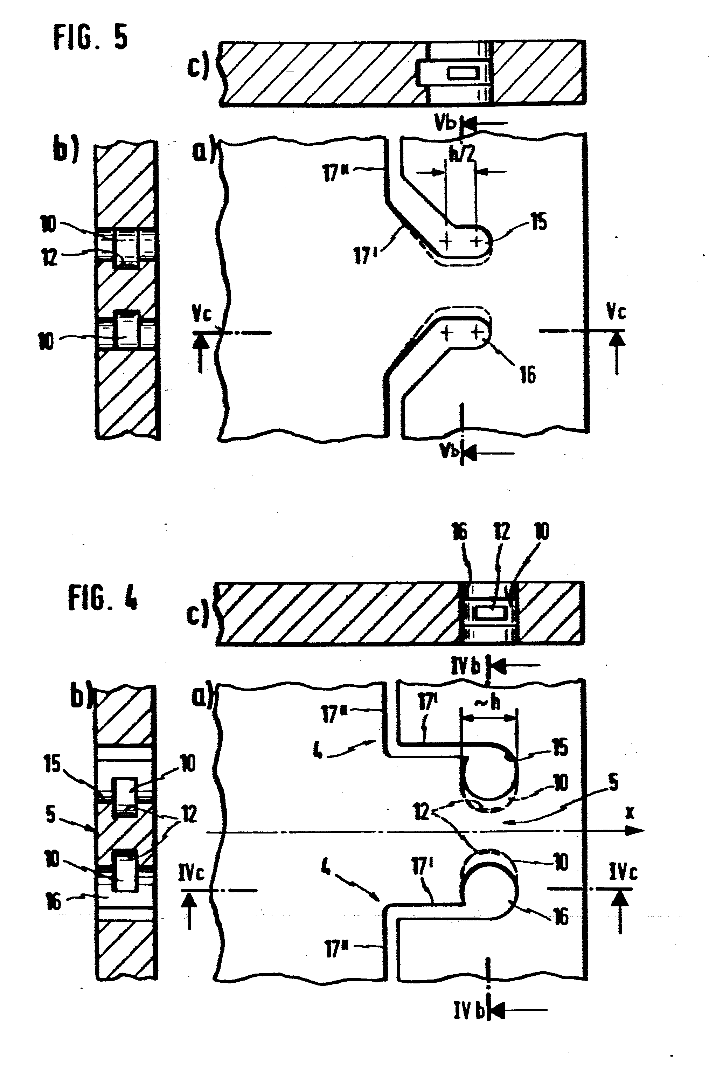

Eine Ausnehmung 4 weist hier zwei im wesentlichen kreisrunde Schwächungsabschnitte 15,16 auf, die durch einen schmalen Verbindungsabschnitt 17 miteinander verbunden sind. Sämtliche Abschnitte 15,16,17 durchsetzen vorteilhaft den Querschnitt der Platte 1, wie dies in den Darstellungen nach Fig. 3b und c zu sehen ist. Der Verbindungsabschnitt 17 ist gegenüber den Schwächungsabschnitten 15,16 zur Plattenmitte hin versetzt und läuft zunächst von jedem Schwächungsabschnitt mit einem Teil 17' in Richtung x und mit seinem längeren Teil 17" in Richtung y (Koordinatensystem wie in Fig. 1). Dies ergibt eine Anordnung mit minimaler Biegung im Bereich der Stege zwischen zwei nicht zur gleichen Ausnehmung 4 gehörenden Schwächungsabschnitten 15,16. Im einzelnen ist die Steggestaltung bei dieser Ausführung aus Fig. 4 ersichtlich. Dort sind zwei gegenüberliegende Schwächungsabschnitte 15,16, die einen Steg 5 bilden und zu zwei verschiedenen Ausnehmungen 4 gehören, in Fig. 4a zu sehen. In dieser Fig. sind gestrichelt und in Fig. 4b ausgezogen taschenartige Vertiefungen 10 zu sehen, die wiederum zu einem Doppel-T-Querschnitt des Steges führen. Dieser Querschnitt ist jedoch in x-Richtung variabel. Er hat seine engste Stelle auf der Höhe der Schnittlinie IVb-IVb in Fig. 4a. Dort sind einander gegenüberliegend auch die Dehnungsmeßstreifen 12 in
die Taschen eingeklebt.

In Fig. 3 ist eine modifizierte Fußauflage der
Auflageleisten 2 dargestellt. Diese Fußauflage
umfaßt einzelne Fußsegmente 20, die sich mit ihrer
Längserstreckung in y-Richtung über mindestens
zwei einen Steg 5 zwischen sich einschließende
Schwächungsabschnitte 15,16 erstrecken und in x-Richtung unter diese Schwächungsabschnitte 15,16 reichen.
Im Bereich unter den Schwächungsabschnitten 15,16
ist eine Vertiefung 22 in dem Metallteil 21 des
Fußsegmentes 20 vorgesehen. Diese Vertiefung 22
ist so dimensioniert, daß die Stege 5 bis zu einer
definierten Last nachgeben können und sich dann
an den Grund der Vertiefung 22 anlegen. Hierdurch
wird ein Überlastungsschutz nicht nur für die Stege
sondern für die gesamte Platte 1 geschaffen, weil
ab dieser definierten Last der Abstützpunkt des
Biegeabschnittes 3 in x-Richtung gesehen weiter
zur Plattenmitte hin rückt.

Auf der in Fig. 3c rechten Seite der Platte 1 ist
zusätzlich eine flexible Abdeckleiste 30 zu erkennen,
die mit Fußsegmenten 20 oder einer durchgehenden,
ähnlich gestalteten Fußleiste zu einer Einheit
zusammengefaßt sein kann. Die Abdeckleiste besteht
aus flexiblem Material wie Gummi und hat eine Abschrägung 31, welche das Auffahren erleichtert.
Auf der Innenseite ist eine Abschrägung 32 vorgesehen, welche zur Radpositionierung dient, insbesondere im Zusammenhang mit einer entsprechenden
Abdeckleiste am in Fig. 3c gesehen linken Rand
der Platte 1.

Fig. 5 zeigt eine Variante, bei welcher statt der kreisrunden Schwächungsabschnitte 15,16 nach Fig. 4 in x-Richtung gradlinige Schwächungsabschnitte 15,16 vorgesehen sind, welche über schräg verlaufende, sich im Querschnitt verengende Zweige 17' in einen schmalen Verbindungsabschnitt 17" übergehen. Auch in diesem Fall sind Taschen 10 vorgesehen, welche einen Doppel-T-Querschnitt der Stege 5 erzeugen. In diesem Fall ist der Querschnitt jedoch über die Steglänge, d. h. in x-Richtung, gleichbleibend jedenfalls an der Aufklebestelle für die Dehnungsmeßstreifen 12. Die Anordnung der Ausnehmungen 4 und Stege 5 wiederholt sich im übrigen in gleicher Weise wie bei der Ausführung nach Fig. 3. Zu deren Beschreibung ist noch nachzutragen, daß Leitungskanäle 18 mit zu den Schwächungsabschnitten 15, 16 führenden Zweigen 19 im Bereich der Auflageleiste auf der Oberseite der Platte 1 vorgesehen sind.

Insbesondere aus Fig. 3 ist ersichtlich, daß die Ausnehmungen und die Leitungskanäle sowie die nicht bezeichneten Verbindungsbohrungen zur Verbindung mit den Fußsegmenten 20 bzw. einer durchgehenden Fußleiste in einer Aufspannung von einer Seite her in die Platte 1 eingearbeitet werden können. Die Taschen 10 werden dabei mittels eines Fräsers in die Stege 5 eingearbeitet. Dies ist bei einem den Meßerfordernissen genügenden Werkstoff der Platte 1 aus einem Walzblech der Aluminiumlegierung AlZnMgCu 0,5 (F45) leicht möglich.

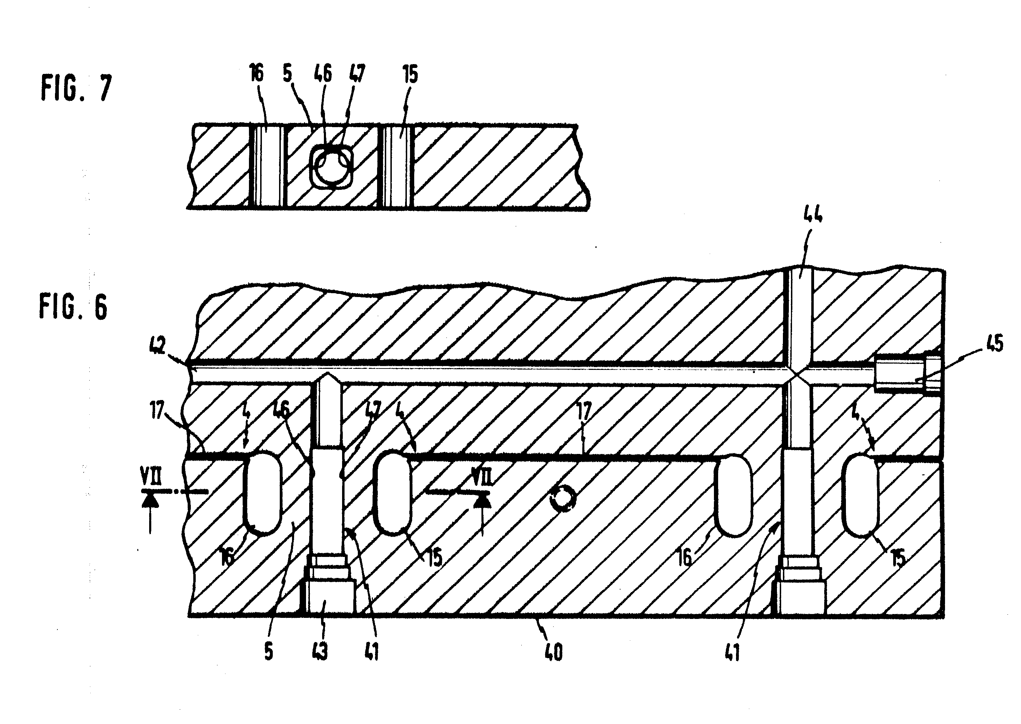

Eine weitere bevorzugte Ausführung einer Radlastwaage nach der Erfindung ist in den Fig. 6 und 7 gezeigt. Bei dieser Ausführung sind von der Seitenkante 40 der Platte 1 her Bohrungen 41 in die Platte eingearbeitet, welche in die Stege 5 genau mittig zwischen die Schwächungsabschnitte 15,16 hinein- und darüber hinausreichen. Die Bohrungen 41 münden in eine Querbohrung 42, welche somit alle Bohrungen 41 verbindet. An ihren Ausgängen 43 sind die Bohrungen hermetisch, d. h. flüssigkeits- und gasdicht, verschlossen. Mindestens eine Bohrung 41 ragt mit einem verlängerten Abschnitt 44 zur anderen Seitenkante, wo sie in eine entsprechende Querbohrung 42 (nicht gezeigt) mündet. Eine der beiden Querbohrungen 42, - im vorliegenden Ausführungsbeispiel die gezeigte Querbohrung 42 -, weist eine dichte Glasdurchführung 45 für den elektrischen Anschluß auf.

Jede der Bohrungen 41 hat im Bereich des Stegs 5, d. h. zwischen den Schwächungsabschnitten 15 und 16, abgeflachte Wände 46,47, auf welche die Dehnungsmeßstreifen aufgeklebt sind, um die Scherbeanspruchungen im Steg 5 erfassen zu können.

Das Bohrungssystem mit den Bohrungen 41 und 42 ersetzt also nicht nur die Leitungskanäle 18,19 bei der Ausführung nach Fig. 3 sondern dient auch zur hermetisch geschützten Unterbringung der Dehnungsmeßstreifen, die bei der Ausführung nach Fig. 3 an vor Umgebungseinflüssen nicht vollständig geschützten und insbesondere Feuchtigkeitsangriff zugänglichen Stellen (Stegwände der Stege 5) angebracht sind.

Diese Ausführung ist deshalb hinsichtlich des Schutzes der Dehnungsmeßstreifen und ihrer elektrischen Versorgung vor mechanischem und chemischem Angriff optimal.

In der gezeigten Art können Plattensegmente mit z. B. zwei in x-Richtung aufeinander ausgerichteten

C144434

Stegen 5 und einer entsprechenden Anzahl von diese Stege begrenzenden Ausnehmungen hergestellt werden und zur Vergrößerung der Belastungsfähigkeit modulartig miteinander verbunden werden, z. B. mittels Stahlwinkeln. Der Abstand der Ausnehmungen 4 in x-Richtung sollte stets so groß sein, daß problemlos der Längslatsch eines Nutzfahrzeugrades auf den ausnehmungsfreien Biegeabschnitt 3 dazwischenpaßt.

Eine wie beschrieben aufgebaute Radlastwaage mit den typischen Abmessungen 700 mm in y-Richtung und 400 mm in x-Richtung hat ein Gewicht in der Größenordnung von 20 kg und ist mittels daran angebrachten Handgriffen leicht transportierbar. Dies ist im Behördeneinsatz oder im Einsatz im privatwirtschaftlichen Bereich ein wesentlicher Vorteil. Eine Waage der beschriebenen Bauart hat eine Genauigkeit, welche eine Einreihung in die Klasse der Grobwaagen erlaubt, d. h. eine Genauigkeit in der Größenordnung von 0,5 % vom Endwert bei der Erfassung der Radlast.

**Dr.-Ing. Roland Liesegang**

Patentanwalt
European Patent Attorney

Sckellstrasse 1
D-8000 München 80
Telefon (089) 4 48 24 96

Telex 5214382 pali d
Telekopierer (089) 272 04 80, 272 04 81
Telegramme patemus münchen

Postscheck München 394 16-802
Hypobank München 6 400 194 333
Reuschelbank München 2 603 007

0144494

DR.-ING. L. PIETZSCH GMBH & CO.
Ettlingen, Bundesrepublik Deutschland
EU 005 58


Radlastwaage

---

Patentansprüche

1. Radlastwaage mit einer rechteckigen, flachen
   Platte, die an zwei gegenüberliegenden Auflagekanten vorzugsweise unterbrochen auflagerbar
   ist, dadurch g e k e n n z e i c h n e t, daß
   die Platte (1) aus elastischem Material mit
   Meßeigenschaften besteht, und daß im Abstand
   von den Auflagekanten (2) mehrere Ausnehmungen (4)
   in der Platte (1) vorgesehen sind, die zwischen
   sich Stege (5) bilden, an denen Meßelemente
   wie Dehnungsmeßstreifen (12) zum Erfassen von
   Biege- und/oder Scherbeanspruchungen angebracht
   sind.

2. Radlastwaage nach Anspruch 1, dadurch g e k e n n -
   z e i c h n e t, daß die Ausnehmungen (4) in
   zwei parallel zu den Auflagekanten (2) verlaufenden
   Reihen mit einem solchen Abstand angeordnet
   sind, daß auf den dazwischen verbleibenden,
   ungeschwächten Plattenabschnitt (3) mindestens
   der Längslatsch eines Nutzfahrzeugreifens paßt.

3. Radlastwaage nach Anspruch 1 oder 2, dadurch g e k e n n z e i c h n e t, daß die Dehnungs-meßstreifen (12) auf in Querschnittsrichtung der Platte (1) verlaufende Wände (9) an bzw. in jedem Steg (5) geklebt sind.

4. Radlastwaage nach einem der Ansprüche 1 bis 3, dadurch g e k e n n z e i c h n e t, daß jeder Steg (5) mindestens einen Hohlraum (10) aufweist, in welchen die Dehnungsmeßstreifen (12) eingeklebt sind.

5. Radlastwaage nach Anspruch 4, dadurch g e k e n n - z e i c h n e t, daß jeder Steg (5) Doppel-T-Querschnitt aufweist und daß die Dehnungsmeßstreifen (12) gegenüberliegend auf den Doppel-T-Steg aufgeklebt sind.

6. Radlastwaage nach Anspruch 4, dadurch g e k e n n - z e i c h n e t, daß der Hohlraum von einer verschlossenen Bohrung (41) gebildet ist, welche von der Seitenkante (40) der Platte (1) her in den Steg (5) hineinreicht.

7. Radlastwaage nach Anspruch 6, dadurch g e k e n n - z e i c h n e t, daß die Bohrungen (41) über die Ausnehmungen (4) hinaus nach innen ragen und mittels einer Querbohrung (42) zur Verkabelung sämtlicher Dehnungsmeßstreifen (12) miteinander verbunden sind.

8. Radlastwaage nach Anspruch 6 oder 7, dadurch g e k e n n z e i c h n e t, daß mindestens eine Bohrung (41) bis zur gegenüberliegenden Seitenkante der Platte (1) ragt.

9. Radlastwaage nach einem der Ansprüche 6 bis 8, dadurch g e k e n n z e i c h n e t, daß die Ausgänge der Bohrungen (41,42) bis auf eine Bohrung (42), welche mittels einer dichten Durchführung (45) für den elektrischen Anschluß ausgerüstet ist, hermetisch abgeschlossen sind.

10. Radlastwaage nach einem der Ansprüche 4 bis 9, dadurch g e k e n n z e i c h n e t, daß die Hohlräume (10;45) abgeflachte Wände (46,47) zur Bildung ebener Auflageflächen für die Dehnungsmeßstreifen (12) aufweisen.

11. Radlastwaage nach einem der Ansprüche 3 bis 10, dadurch g e k e n n z e i c h n e t, daß jede Ausnehmung (4) zwei Schwächungsabschnitte (15,16), welche die einander zugewandten Seiten zweier benachbarter Stege (5) begrenzen, sowie einen schmalen Verbindungsabschnitt (17) für die beiden Schwächungsabschnitte (15,16) aufweist.

12. Radlastwaage nach einem der Ansprüche 2 bis 11, dadurch g e k e n n z e i c h n e t, daß die Platte in Fahrtrichtung gesehen in mehrere Segmente unterteilt ist, die je nach dem Einsatzfall bzw. Größe der zu erfassenden Last in jeder Reihe einen oder mehr Stege (5) bzw. Paare von Ausnehmungen (4) aufweisen, wobei mehrere Segmente modulartig zu unterschiedlich großen Platten zusammenfügbar sind.

13. Radlastwaage nach einem der Ansprüche 1 bis 12, dadurch g e k e n n z e i c h n e t, daß je eine flexible Abdeckleiste (30) für jede der beiden Auflagekanten (2) vorgesehen sind, die Schwellen für die Radpositionierung bilden.

14. Radlastwaage nach einem der Ansprüche 1 bis 13, dadurch g e k e n n z e i c h n e t, daß die Platte (1) aus einer hochfesten Leichtmetalllegierung, insbesondere aus einem Walzblech der Aluminiumlegierung AlZnMgCu 0,5 besteht.

15. Radlastwaage nach einem der Ansprüche 1 bis 14, dadurch g e k e n n z e i c h n e t, daß die Auflagekanten (2) über Fußelemente (20) abgestützt sind, welche bis unter die Stege (5) reichen, jedoch in den Bereichen unter den Stegen Vertiefungen (22) aufweisen, derart, daß die Stege ab einer definierten Last auf den Fußelementen aufliegen.

0144494

FIG. 1

FIG. 2

FIG. 3

C144494

# FIG. 5

# FIG. 4

FIG. 7

FIG. 6

0144494

))) **Europäisches**
**Patentamt**

## EUROPÄISCHER RECHERCHENBERICHT

| | EINSCHLÄGIGE DOKUMENTE | | EP 84105672.4 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl.4)** |
| X | CH - A - 497 690 (BLH ELECTRONICS)<br>* Fig. 1-3,4-10 * | 1-5, 11 | G 01 G 19/02<br>G 01 G 3/14 |
| X | EP - A1 - 0 034 656 (HOTTINGER)<br>* Fig. 1-3 | 1,2 | |
| A | | 11,15 | |
| X | US - A - 3 966 003 (MILLER)<br>* Fig. 1,2 * | 1,15 | |
| X | US - A - 3 949 822 (ENGLISH et al.)<br>* Fig. 1-3 * | 1,15 | |
| | | | **RECHERCHIERTE SACHGEBIETE (Int. Cl.4)** |
| A | GB - A - 2 054 874 (MASSTRON SCALE)<br>* Fig. 1 * | 12,15 | G 01 G 19/00<br>G 01 G 3/00 |

Der vorliegende Recherchenbericht wurde für alle Patentansprüche erstellt.

| Recherchenort | Abschlußdatum der Recherche | Prüfer |
|---|---|---|
| WIEN | 08-02-1985 | BURGHARDT |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82